Europäisches Patentamt

European Patent Office

Office européen des brevets

(19)

(11) Veröffentlichungsnummer: **0 346 352 B1**

(12) **EUROPÄISCHE PATENTSCHRIFT**

(45) Veröffentlichungstag der Patentschrift: **06.02.91**

(21) Anmeldenummer: **88901411.4**

(22) Anmeldetag: **02.02.88**

(86) Internationale Anmeldenummer:
**PCT/EP88/00074**

(87) Internationale Veröffentlichungsnummer:
**WO 88/06114 25.08.88 Gazette 88/19**

(51) Int. Cl.⁵: **B 62 D 5/07, F 15 B 11/16**

(54) **HYDRAULIKEINRICHTUNG MIT EINER REGELBAREN PUMPE.**

(30) Priorität: **19.02.87 DE 3705309**

(43) Veröffentlichungstag der Anmeldung:
**20.12.89 Patentblatt 89/51**

(45) Bekanntmachung des Hinweises auf die
Patenterteilung:
**06.02.91 Patentblatt 91/06**

(84) Benannte Vertragsstaaten:
**DE SE**

(56) Entgegenhaltungen:
**DE-A-3 507 122
DE-A-3 540 236
DE-A-3 619 331
FR-A-2 518 030
US-A-4 005 636
US-A-4 463 557**

(73) Patentinhaber: **ZAHNRADFABRIK
FRIEDRICHSHAFEN AKTIENGESELLSCHAFT
Löwentaler Strasse 100 Postfach 2520
D-7990 Friedrichshafen 1 (DE)**

(72) Erfinder: **TISCHER, Werner
Im Brühl 33
D-7072 Heubach-Lautern (DE)**

(74) Vertreter: **Raue, Reimund et al
Zahnradfabrik Friedrichshafen AG Löwentaler
Strasse 100 Postfach 2520
D-7990 Friedrichshafen 1 (DE)**

EP 0 346 352 B1

**Beschreibung**

Stand der Technik

Die Erfindung betrifft eine Hydraulikeinrichtung mit einer regelbaren Pumpe, die einen Lenkungskreislauf mit einem Lenkventil mit Druckmittel bevorrechtigt versorgt und mit mindestens einem weiteren hydraulischen Arbeitskreis mit einem Stromteilventil, das die Priorität das Lenungskreislaufes gewährleistet und mit einem Wechselventil, das entsprechend dem jeweils höheren Hydraulikdruck des Lenkungskreislaufes oder des Arbeitskreises die Pumpe regelt.

In der DE—A 35 40 236 ist eine Hydraulikbzw. Steuereinrichtung beschrieben, wobei das Stromteilventil den Pumpenstrom so aufteilt, daß über den einen Stromzweig dem Lenkventil des Lenkungskreislaufes ein Arbeitsstrom und über den anderen Stromzweig einem Betätigungsoder Steuerventil eine Arbeitshydraulik ein Reststrom zufließt. Das Stromteilventil versorgt dabei für die Fahrsicherheit vorrangige Lenkeinrichtung bevorzugt mit Druckmittel, im allgemeinen Öl. Hierzu ist stromabwärts der Pumpe hinter einer Steuerkante des Stromteilventiles für den Arbeitsstrom der Lenkung eine Meßlende vorgesehen. Über die Meßblende wird das Lenkventil in seiner Neutralstellung ständig von einem kleinen Pilotstrom durchflossen. Im Normalfall ist der Stromzweig für den Arbeitsstrom der Lenkung zwischen der erwähnten Steuerkante und der Meßlende angeschlossen. Auf diese Weise kann die Arbeitshydraulik den Arbeitsdruck im Stromzweig der Lenkung nicht beeinflussen. Nachteilig dabei ist jedoch, daß die Konstantpumpe immer mit maximalen Druck und maximaler Menge fördert. Aus diesem Grunde ist im einer älteren Anmeldung bereits vorgeschlagen worden eine Regelblende bzw. ein Wechselventil in die Hydraulikeinrichtung so einzubauen, daß in Abhängigkeit von dem Druck in dem Lenkungskreislauf die Fördermenge der Pumpe geregelt wird. Damit wird praktisch eine lastabhängige Regelung erreicht. Bei einer kleinen Druckdifferenz schwenkt die Pumpe aus und fördert mehr Öl. Hingegen bei einer großen Druckdifferenz wird sie in Richtung einer kleineren Fördermenge verschwenkt.

Nachteilig dabei ist jedoch, daß bei Druckerhöhungen in der Lenkung die Pumpe in Richtung größerer Fördermenge auschwenkt, was dadurch auch Auswirkungen auf die Arbeitshydraulik hat. Diese Ernöhung der Fördermenge führt nämlich zu einer veränderten Arbeitsgeschwindigkeit in der Arbeitshydraulik, wodurch es zu Störungen und Gefährdungen kommen kann. Der Öldurchlaß muß dann von Hand über ein Ventil reduziert werden. In gleicher Weise gibt es Störungen, wenn beide Hydraulikkreise voll beaufschlagt werden und der Druck in der Lenkung höher ist. In diesem Falle fördert nämlich die Pumpe ihre Maximalmenge und wegen des geringeren Widerstandes geht eine Entsprechend höhere Menge in den Arbeitskreis.

Aufgabe und Lösung

Der vorliegenden Erfindung liegt daher die Aufgabe zugrunde ein Hydraulikeinrichtung der eingangs erwähnten Art zu schaffen, bei der Störungen in der Fördermenge und/oder dem Druck, die durch unterschiedliche Betriebsweisen des Lenkungskreises auftreten, keine Auswirkungen auf die Arbeitshydraulik haben. Dabei soll auch bei maximalen Bedarf der Lenkung kein Druckmittel zum Tank abfließen.

Erfindungsgemäß wird diese Aufgabe durch die im kennzeichnenden Teil von Anspruch 1 genannten Merkmale gelöst.

Das erfindungsgmäß Regelventil wirkt praktisch wie ein Druckkompensator. Dabei bleibt die Arbeitsgeschwindigkeit der Arbeitshydraulik unabhängig vom Lenkungsdruckaufbau. Entsprechend der gewählten Vorgabe kann deshalb die Arbeitsgeschwindigkeit konstant gehalten bleiben.

Eine Druckwaage, die in ähnlicher Weise wie das erfindungsgemäße Regelventil arbeitet, ist bekannt aus der DE—A 35 07 122. Da diese Druckwaage jedoch gleichzeitig einen Teil des Stromteilventils bildet, ist der Einbau eines zusätzlichen Proportionalventils erforderlich, um den Regelkolben der Druckwaage vom Druck zu entlasten. Dabei ergibt sich ein Verluststrom zum Tank, der die maximale Lenkgeschwindigkeit einschränken kann.

Einsatzfälle für die erfindungsgemäße Einrichtung sind insbesondere Schlepper mit Regelhydraulik, z.B. für den Zapfwellenantrieb. Für die Lenkungen können sowohl hydrostatische Lenkungen als auch Hydrolenkungen mit lastabhängigem bzw. lastfühlendem Signal verwendet werden.

Das Gleichgewicht in dem Regelventil wird dadurch erreicht, daß der Druck in der Zuleitung zum Arbeitskreis mit dem Arbeitsdruck im Arbeitskreis, der lediglich durch eine durch eine Schaltfeder unterstützt ist, verglichen wird.

In einer Weiterbildung der Erfindung kann das Steuer- bzw. Betätigungsventil für die Arbeitshydraulik mit einer Verstelleinrichtung versehen sein. Diese Verstelleinrichtung kann automatisch oder — was im allgemeinen der Fall ist — manuell betätigt werden. Dadurch wird der Verstellkolben entsprechend der gewünschten Arbeitsgeschwindigkeit eingestellt.

In einfacher Weise kann vorgesehen sein, daß das Regelventil zwischen dem Stromteilventil und dem Steuerventil der Arbeitshydraulik eingesetzt ist, und daß die Steuerleitung mit dem Druck aus der Zuleitung zum Arbeitskreis zwischen dem Regelventil und dem Steuerventil für die Arbeitshydraulik abzweigt.

In vorteilhafter Weise kann vorgesehen sein, daß von dem Steuerventil der Arbeitshydraulik eine mit dem Arbeitsruck beaufschlagte Steuerleitung zu einem Wechselventil führt.

Durch diese Steuerleitung und das Wechselventil wird die Pumpe auch über den Arbeitsdruck der Arbeitshydraulik geregelt.

## Erläuterung der Erfindung

Nachfolgend ist ein Ausführungsbeispiel der Erfindung anhand des hydraulischen Schaltschemas prinzipmäßig beschrieben.

Grundsätzlich ist die Hydraulikeinrichtung von bekannter Bauert, wozu z.B. auf die DE—A 35 40 236 verwiesen wird. Aus einem Ölbehälter 1 saugt eine Verstellpumpe 2 Drucköl an und fördert dieses inein Stromteilventil 3. Das Stromteilventil 3 begrenzt den Drucksölstrom der Pumpe 2 bei nichtbetätigten Hydraulikkreisen, d.h. eiem Lenkungskreis 4 und einem Arbeitskreis 5. Ein von dem Stromteilventil 3 gelieferter Teilstrom dient als Pilotstrom in einer Pilotstromleitung 6 für ein Leknventil 7. Eine Meßblende 8 ist in der Pilotstromleitung 6 angeordnet und befindet sich zwischen einer dazugehörigen Steuerkante zwischen der Pumpe 2 und der Pilotstromleitung 6, d.h. im Konstantstromausgang des Stromteilventiles 3. Auf diese Weise wirken sich die Arbeitstdrücke in dem zur Arbeitshydraulik über eine Zuleitung 9 geführten Förderstrom nicht auf den an der Meßblende 8 herrschenden Absolutdruck aus.

Der Lenkungskreislauf 4 ist von allgemeinen Aufbau, weshalb er nachfolgend nicht näher beschrieben wird. Er weist in üblicher Weise eine Dosierhandpumpe 10 auf, über die die Druckmittelsteuerung für das Lenkventil 7 erfolgt. Weiterhin sind Sicherheitsventile 11 und 12, sowie Nachsaugventile 13 und 14 für einen Lenkzylinder 15 vorgesehen. Von der Zuleitung 16 zum Lenkungskreis zweigen Steuerleitungen 17 und 18 zu einem Wechselventil 19 ab über die die Regelpumpe 2 in Abhängigkeit de Druckes im Lenkungskreis geregelt wird.

In dem Arbeitskreis 5 befindet sich in üblicher Weise ein Steuer- bzw. Betätigungsventil 20, das mit einer manuell verstellbaren Betätigungseinrichtung 21 versehen ist. Von dem Steuerventil 20 aus zweigt eine mit dem Arbeitsdruck des Arbeitskreises 5 aus versehene Steuerleitung 22 zu dem Wechselventil 19 ab, womit die Pumpe 2 entsprechend dem herrschenden Druck in dem Lenkungskreis 4 oder dem Arbeitskreis 5 aus verstellt wird. Von dem Steuerventil 20 aus führen in üblicher Weise Druckleitungen 23 zu einem Arbeitszylinder 24.

Zwischen dem Stromteilventil 3 und dem Steuerventil 20 is in die Zuleitung 9 ein Regelventil 25 eingesetzt. Das Verstellglied des Regelventiles 25 wird auf gegenüberliegenden Seiten einmal über eine Steuerleitung 26 mit dem Druck in der Zulaufleitung 9 und über eine Steuerleitung 27, die aus der Steuerleitung 22 abzweigt mit Steuerdruck versehen. Da in der Steuerleitung 22 der Arbeitsdruck der Arbeitshydraulik herrscht, liegt auf dieser Seite des Stellgliedes des Regelventiles 25 ebenfalls der Arbeitsdruck an. Zusätzlich ist das Stellglied auf dieser Seite mit einer Schaltfeder 28 versehen.

Das Regelventil wirkt als Druckwaage bzw. Druckkompensator. Es findet nämlich ein Vergleich und damit ein Gleichgewichtszustand zwischen dem Druck in der Zuleitung zu dem Steuerventil 20 und dem Arbeitsdruck im Arbeitskreis über die Steuerleitungen 27 zusammen mit der Schaltfeder 28 statt. Dies hat die Wirkung, daß auch bei einem Druckabfall in der Zuleitung 9 die Arbeitsgeschwindigkeit in dem Arbeitszylinder 24 unabhängig von dem Druckaufbau in dem Lenkungskreis 4 beibehalten bleiben kann. Erhöht sich der Zulaufdruck 9, so wird er aufgrund einer entsprechenden Verstellung in dem Regelventil 25 zur Wiederherstellung des Gleichgewichtes entsprechend reduziert, denn in diesem Falle verschiebt sich das Verstellglied in dem Regelventil entsprechend nach rechts gegen den Druck in der Steuerleitung 27 und den Druck der Feder 28 und drosselt damit den Zulauf.

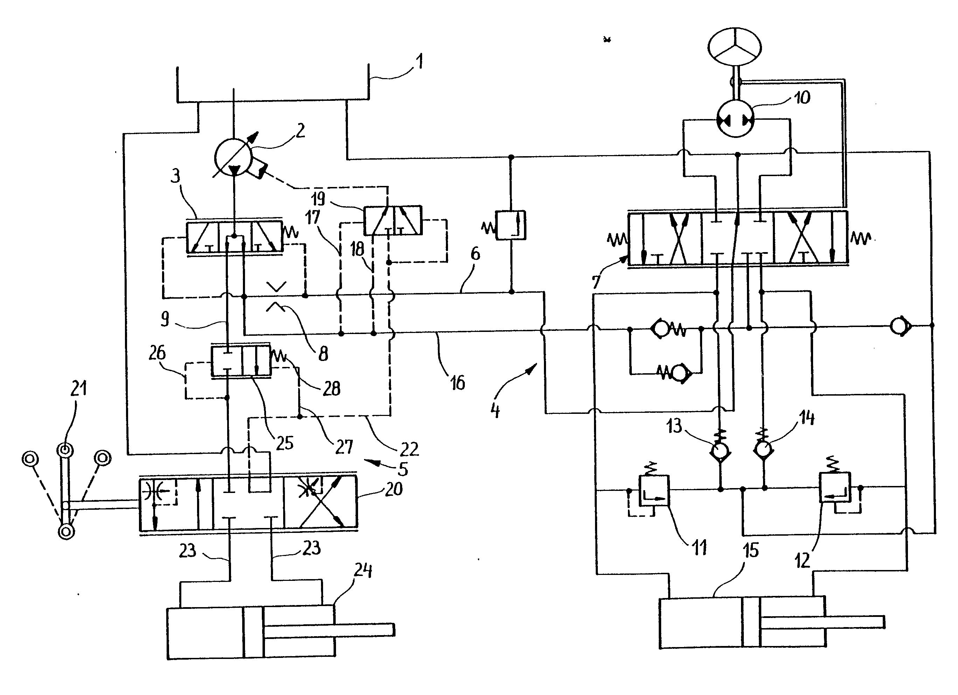

## Patentansprüche

1. Hydraulikeinrichtung mit einer regelbaren Pumpe (2), die einen Lenkungskreislauf (4) mit einem Lenkventil (7) mit Druckmittel bevorrechtigt versorgt, mit mindestens einem weiteren hydrauslichen Arbeitskreis (5), mit einem Stromteilventil (3), das mit einer festen Meßlende (8) die Priorität des Lenkungskreislaufes (4) gewährleistet und mit einem Wechselventil (19), das entsprechend dem jeweils höheren Hydraulikdruck des Lenkungskreislaufes (4) oder des Arbeitskreises (5) die Pumpe regelt, dadurch gekennzeichnet,

daß in der Zuleitung (9) zum Arbeitskreis (5) ein Regelventil (25) angeordnet ist, das ein Gleichgewicht einstellt zwischen dem Arbeitsdruck im Arbeitskreis (5) zusammen mit einer Schaltfeder (28) und dem Zulaufdruck der Zuleitung (9; und

daß das Regelventil (25) zwischen dem Stromteilventil (3) un dem Steuerventil (20) des Arbeitskreises (5) eingesetzt ist.

2. Hydraulikeinrichtung nach Anspruch 1, dadurch gekennzeichnet, daß eine Steuerleitung (26) von der Zuleitung (9) zum Arbeitskreis (5) zwischen dem Regelventil (25) und dem Steuerventil (20) des Arbeitskreises (5) abzweigt.

3. Hydraulikeinrichtung nach Anspruch 1, dadurch gekennzeichnet, daß von dem Steuerventil (20) des Arbeitskreises (5) eine mit dem Arbeitsdruck beaufschlagte Steuerleitung (22) zu dem Wechselventil (19) führt.

## Revendications

1. Dispositif hydraulique avec une pompe réglable (2) qui alimente en priorité un circuit de direction (4) avec soupape de direction (7) au moyen d'un fluide sous pression et au moins un autre circuit de travail hydraulique (5) ainsi qu'une soupape de distribution (3) qui assure la priorité du circuit de direction (4) grâce à un orifice de mesure fixe (8) et une soupape d'inversion (19) réglant la pompe (2) en fonction de l'intensité de la pression hydraulique du circuit de direction (4) ou du circuit de travail (5), caractérisé en ce:

qu'une soupape de réglage (25) est placée dans la conduite d'amenée (9) au circuit de travail (5) et assure un équilibre entre la pression de service régnant dans le circuit de travail (5) à l'aide d'un ressort d'interrupteur (28) et la pression d'entrée dans la conduite d'amenée (9) et en ce que la soupape de réglage (25) est située entre la soupape de distribution (3) et la soupape de commande (20) du circuit de travail (5).

2. Dispositif hydraulique selon la revendication 1, caractérisé en ce qu'une conduite de commande (26) dérive de la conduite d'amenée (9) au circuit de travail (5) entre la soupape de réglage (25) et la soupape de commande (20) du circuit de travail (5).

3. Dispositif hydraulique selon la revendication 1, caractérisé en ce qu'une conduite de commande (22) soumise à la pression de service parte de la soupape de commande (20) du circuit de travail (5) pour mener jusqu'à la soupape d'inversion (19).

## Claims

1. Hydraulic unit with a governable pump (2) which provides a steering circuit (4) and its steering valve (7) with priority supply of a pressure medium and having at least one other hydraulic operating circuit (5) with a flow-divider valve (3) fitted with a fixed measuring strip (8) which ensures that the steering circuit (4) receives priority supply and also fitted with a reciprocating valve (19) which governs the pump (2) in accordance with which circuit has the higher hydraulic pressure, these being the steering circuit (4) or the operating circuit (5) and characterised in that a control valve (25) is arranged in the inlet pipe (9) for the operating circuit (5) which maintains a balance between operating pressure in the operating circuit (5) by means of a spring (28) and the inlet pressure to the inlet pipe (9) itself and that the control valve (25) is located between the flow-divider valve (3) and the control valve (20) of the operating circuit (5).

2. Hydraulic unit as claimed in claim 1, characterised in that a control pipe (6) from the inlet pipe (9) of the operating circuit (5) branches between the regulating valve (25) and the control valve (20) of the operating circuit (5).

3. Hydraulic unit as claimed in claim 1, characterised in that a control pipe (22) pressurised to operating pressure leads from control valve (20) of the operating circuit (5) to a reciprocating valve (19).